# EUROPÄISCHE PATENTSCHRIFT

(11) **EP 2 781 664 B1**
(45) Veröffentlichungstag und Bekanntmachung des Hinweises auf die Patenterteilung: **17.04.2019**
(21) Anmeldenummer: 14000691.7
(22) Anmeldetag: 26.02.2014
(51) Int. Cl.: E03C 1/04

(54) **Sanitärarmatur mit Innenschlauchanordnung**
Sanitary fitting with internal hose assembly
Robinetterie sanitaire avec tuyauterie intérieure

(30) Priorität: 08.03.2013 DE 202013002188 U
(43) Veröffentlichungstag der Anmeldung: 24.09.2014
(60) Teilanmeldung: 15001581.6
(73) Patentinhaber: Neoperl GmbH, 79379 Müllheim (DE)
(72) Erfinder: Schürle, Holger, 79379 Müllheim (DE)
(74) Vertreter: Börjes-Pestalozza, Henrich

(56) Entgegenhaltungen:
- EP-A1- 2 112 281
- EP-A2- 2 497 866
- DE-A1- 10 052 500

## Beschreibung

Die Erfindung betrifft ein sanitäres Einbauteil nach dem Oberbegriff von Anspruch 1.

Derartige sanitäre Einbauteile sind bekannt und werden verwendet, um die Zulaufschläuche, die Einhebel-Mischkartusche und ein an einen Verbindungsschlauch angeordnetes Auslaufmundstück miteinander in einer Sanitärarmatur zu verbinden.

So kennt man aus der EP 2 497 866 A2 eine Sanitärarmatur, in deren Armaturenkorpus ein sanitäres Einbauteil der eingangs erwähnten Art eingesetzt ist. Das vorbekannte Einbauteil weist ein Zwischenstück mit einer einstückig daran angeformten Scheibe auf, wobei das Zwischenstück über Befestigungsschrauben auch mit einer oberen Scheibe verbunden ist. Im Zwischenstück und in der oberen Scheibe sind jeweils Durchleitungsrohre beziehungsweise Wasserdurchtrittsöffnungen angeordnet, durch die Zulaufrohre für das kalte und das warme Wasser hindurchgeführt sind. Diese Zulaufrohre sind mittels einer geeigneten Haltescheibe in dem Batteriekörper festgelegt, ohne an entsprechenden Aufnahmen des Zwischenstücks gehalten zu sein. Die mit dem Zwischenstück verbundene obere Scheibe bildet ein Verbindungsmittel für eine darüberliegende Einhebel-Mischkartusche. Zwischen dem Zwischenstück und der oberen Scheibe ist ein hülsenförmiger Wasserverteilring mit einem Schlauchstutzen drehbar eingespannt. Dabei mündet dieser Schlauchstutzen an seinem dem Schlauch abgewandten Stutzenende im Hülseninneren des Wasserverteilringes.

Die Erfindung betrifft weiter eine Innenschlauchanordnung für eine Sanitärarmatur mit dem vorerwähnten sanitären Einbauteil.

Innenschlauchanordnungen für Sanitärarmaturen sind bekannt und werden eingesetzt, um einen direkten Kontakt des fließenden Wassers mit einer metallischen Oberfläche der Sanitärarmatur zu vermeiden.

Die Erfindung betrifft schließlich eine Sanitärarmatur mit einer Einhebel-Mischkartusche, einer ersten Aufnahme für ein Kaltwasserschlauchendstück und einer zweiten Aufnahme für ein Warmwasserschlauchendstück und einem Auslaufmundstück.

Derartige Sanitärarmaturen sind bekannt und weisen häufig einen Schwenkarm auf, um das Auslauf-Mundstück zu verschwenken.

Der Erfindung liegt die Aufgabe zugrunde, einen Einsatz einer Innenschlauchanordnung bei einer Sanitärarmatur mit einer Einhebel-Mischkartusche zu ermöglichen.

Zur Lösung dieser Aufgabe sieht die Erfindung die Merkmale von Anspruch 1 vor. An der Grundplatte des erfindungsgemäßen Einbauteiles ist ein Anschlussstück schwenkbar befestigt, welches einen Innenkanal aufweist, der an einem ersten Ende an dem Adapterstück und an einem zweiten Ende an einem Schlauchanschluss mündet. Von Vorteil ist dabei, dass das sanitäre Einbauteil zum Einsatz in einer Sanitärarmatur mit einem Schwenkarm eingerichtet ist, an welchem ein Auslauf-Mundstück befestigt ist. Denn die schwenkbare Befestigung des Anschlussstückes ermöglicht eine Bewegung des Schwenkarms bei festgehaltener Einhebel-Mischkartusche.

Erfindungsgemäß ist bei dem sanitären Einbauteil der eingangs beschriebenen Art nun vorgesehen, dass an dem Anschlussstück ein Zapfen ausgebildet ist, welcher mit einer passenden Zapfenaufnahme der Grundplatte eine Schwenklagerung bildet. Von Vorteil ist dabei, dass eine einfache schwenkbare Befestigung gebildet ist. Da bei dem erfindungsgemäßen Einbauteil der Zapfen in einer Verlängerung des ersten Endes ausgebildet ist und da die Zapfenaufnahme parallel zu einer Längsachse des sanitären Einbauteils ausgerichtet ist, definiert das erste Ende eine Schwenkachse, und es ist erreichbar, dass das erste Ende während des Schwenkens ortsfest verbleibt. Hierdurch ist ein dichter Anschluss des Anschlussstücks an dem Verbindungsmittel ermöglicht. Da an der Grundplatte oder dem Adapterstück des erfindungsgemäßen Einbauteils eine Aussparung ausgebildet ist, welche einen verfügbaren Schwenkwinkel für das Anschlussstück begrenzt, wird Raum geschaffen für die Schwenkbewegung.

Bei einer Ausgestaltung der Erfindung kann vorgesehen sein, dass der Innenkanal zwischen dem ersten Ende und dem zweiten Ende in einem Winkel geführt ist. Von Vorteil ist dabei, dass mit einem Ende des Anschlussstücks eine Schwenkachse definierbar ist, um welche das andere Ende des Anschlussstücks schwenkbar ist. Hierdurch kann der Schlauchanschluss eine Schwenkbewegung eines Schwenkarms nachvollziehen. Die schwenkbare Ausbildung des Anschlussstücks hat den weiteren Vorteil, dass eine überschüssige Länge eines an den Schlauchanschluss angeschlossenen Verbindungsschlauchs aufnehmbar ist, indem das Anschlussstück aus der direkten Verbindungslinie zu einem Auslauf-Mundstück herausgeschwenkt wird.

Bevorzugt ist der Zapfen mit einer Rastnase versehen, um in der Zapfenaufnahme formschlüssig gehalten zu sein. Hierbei kann vorgesehen sein, dass der Zapfen geschlitzt ausgeführt ist, um diese formschlüssige Verbindung lösen zu können.

Bei einer Ausgestaltung der Erfindung kann vorgesehen sein, dass die Zapfenaufnahme parallel zu einer Längsachse des Einbauteils ausgerichtet ist. Von Vorteil ist dabei, dass das Anschlussstück leicht in die Zapfenaufnahme einsetzbar ist, da die Montagerichtung des sanitären Einbauteils typischerweise durch dessen Längsachse gegeben ist.

Zweckmäßig ist es, wenn das Verbindungsmittel als standardisierte Schnittstelle für eine Einhebel-Mischkartusche ausführbar ist. Von Vorteil ist dabei weiter, dass eine Anpassung an individuelle Einhebel-Mischkartuschen lediglich eine Änderung in dem Adapterstück notwendig macht, sodass die übrigen Teile des sanitären Einbauteils unverändert bleiben können. Bevorzugt ist das Verbindungsmittel plan ausgebildet, um an handelsübliche Einhebel-Mischkartuschen anschließbar zu sein.

Die Anschließbarkeit an eine Einhebel-Mischkartusche ist dadurch realisierbar, dass das Verbindungsmittel drei Anschlussöffnungen aufweist, welche passend zu entsprechenden drei Anschlussöffnungen der Einhebel-Mischkartusche ausgebildet und angeordnet sind.

Bei einer Ausgestaltung der Erfindung kann vorgesehen sein, dass das Anschlussstück in einem das erste Ende des Verbindungskanals enthaltenden Anschlussbereich mit einer Anschlussstückaufnahme des Adapterstücks steckverbunden ist. Von Vorteil ist dabei, dass eine einfache Montage ermöglicht ist. Von Vorteil ist weiter, dass die Steckverbindung als Gegenlager eines Schwenklagers ausführbar ist.

Hierbei kann vorgesehen sein, dass die Anschlussstückaufnahme als Schwenklager für das Anschlussstück ausgebildet ist. Von Vorteil ist dabei, dass eine zweiseitige schwenkbare Befestigung des Anschlussstücks ausführbar ist. Somit ist das Anschlussstück axial bezüglich der Schwenkachse festlegbar, wobei die Schwenkbewegung ungehindert ermöglicht ist.

Besonders günstig ist es dabei, wenn der Zapfen und der Anschlussbereich des Anschlussstücks zueinander koaxial ausgerichtet sind. Von Vorteil ist dabei, dass eine gemeinsame Schwenkachse definierbar ist.

Bei einer Ausgestaltung der Erfindung kann vorgesehen sein, dass in dem Adapterstück je eine Schlauchaufnahme zum Anschluss des Kaltwasserschlauchendstücks und des Warmwasserschlauchendstücks ausgebildet ist. Von Vorteil ist dabei, dass kein dichtender Abschluss an der Grundplatte für das Kaltwasserschlauchendstück und das Warmwasserschlauchendstück erforderlich ist.

Zur Fixierung der Schlauchendstücke kann vorgesehen sein, dass an der Grundplatte eine einsetzbare Sicherungsplatte angeordnet ist. Bevorzugt ist diese Sicherungsplatte quer zu einer Einsteckrichtung des Kaltwasserschlauchendstücks und des Warmwasserschlauchendstücks einsetzbar. Von Vorteil ist dabei, dass die Schlauchendstücke mit ringförmigen Vorsprüngen oder Nuten ausführbar sind, welche durch die Sicherungsplatte zur Fixierung in Einsteckrichtung hintergreifbar sind.

Bei einer Ausgestaltung der Erfindung kann vorgesehen sein, dass in dem Adapterstück wenigstens ein bezüglich einer Längsachse schräg verlaufender Verbindungsgang, der das Verbindungsmittel mit der Grundplattenaufnahme verbindet, ausgebildet ist. Von Vorteil ist dabei, dass die Anschlüsse von der Grundplattenaufnahme zu dem Verbindungsmittel und somit weiter zur Einhebel-Mischkartusche führbar sind. Bevorzugt sind für die zwei Zulaufschläuche zwei Verbindungsgänge und für den Abfluss zum Auslauf-Mundstück ein weiterer Verbindungsgang in dem Adapterstück ausgebildet. Durch die Ausbildung von Verbindungsgängen in dem Adapterstück ist es ermöglicht, die einheitliche Grundplattenaufnahme an verschiedene Verbindungsmittel für unterschiedliche Arten von Einhebel-Mischkartuschen anzupassen.

Bei einer Ausgestaltung der Erfindung kann vorgesehen sein, dass der Anschlussstückaufnahme ein zum Verbindungsmittel mündender Verbindungsgang erster Art zugeordnet ist. Zusätzlich oder stattdessen ist es möglich, dass den Schlauchaufnahmen jeweils ein zum Verbindungsmittel mündender Verbindungsgang zweiter Art zugeordnet ist. Von Vorteil ist dabei, dass die Schlauchanschlüsse an die Einhebel-Mischkartusche führbar sind.

Hierbei kann vorgesehen sein, dass der Verbindungsgang erster Art in dem Adapterstück kreuzend zu den Verbindungsgängen zweiter Art verläuft. Diese spezielle Führung der Verbindungsgänge in dem Adapterstück ermöglicht es, das Anschlussstück in der Einbauposition an der dem Auslauf-Mundstück zugewandten Seite des sanitären Einbauteils anzuordnen. Denn die handelsüblichen Einhebel-Mischkartuschen weisen die Eigenschaft auf, dass die Zuläufe in Einbauposition an der dem Auslauf-Mundstück zugewandten Seite angeordnet sind, während der Auslass der Einhebel-Mischkartusche an der von dem Auslauf-Mundstück abgewandten Seite, also hinter den Zuläufen angeordnet ist. Durch die kreuzende Anordnung wird erreicht, dass dieser Auslass zum schwenkbaren Anschlussstück an den Zuläufen vorbeigeführt ist.

Bei einer Ausgestaltung der Erfindung kann vorgesehen sein, dass der Schlauchanschluss als Schlauchnippel oder Olive ausgebildet ist. Von Vorteil ist dabei, dass ein Verbindungsschlauch einfach und sicher anschließbar ist.

Bei einer Ausgestaltung der Erfindung kann vorgesehen sein, dass die Schlauchaufnahmen und/oder die Anschlussstückaufnahme jeweils einen Dichtring aufweist/aufweisen. Von Vorteil ist dabei, dass ein dichter Abschluss des wasserführenden Systems ermöglicht ist, der gleichzeitig eine Beweglichkeit des Anschlussstücks bewahrt.

Bei einer Ausgestaltung der Erfindung kann vorgesehen sein, dass die Aussparung keilförmig ausgebildet ist, um einen definierten maximalen Schwenkwinkel bereitzustellen.

Bei einer Ausgestaltung der Erfindung kann vorgesehen sein, dass an der Grundplatte eine Verdrehsicherung ausgebildet ist. Dies kann beispielsweise eine unrunde Verdrehsicherung sein. Von Vorteil ist dabei, dass ein Mitdrehen des sanitären Einbauteils bei einem Schwenken eines Schwenkarms einer Sanitärarmatur vermeidbar ist.

Bei einer Ausgestaltung der Erfindung kann vorgesehen sein, dass die Grundplatte und/oder das Adapterstück aus Kunststoff gefertigt ist/sind. Von Vorteil ist dabei, dass eine einfache Formgestaltung der Einzelteile des sanitären Einbauteils ermöglicht ist. Dies ermöglicht die Fertigung und senkt die Fertigungskosten. Die Grundplatte und/oder das Adapterstück können auch aus Metall gefertigt sein, beispielsweise um eine erhöhte Standfestigkeit zu erreichen.

Alternativ oder zusätzlich kann vorgesehen sein, dass die Sicherungsplatte aus Metall gefertigt ist. Von Vorteil ist dabei, dass ein sicherer, verschleißarmer Halt der Kaltwasser- und Warmwasserschlauchendstücke ermöglicht ist. Die Sicherungsplatte kann auch aus Kunststoff gefertigt sein, um Fertigungskosten einzusparen und/oder Korrosion zu vermeiden.

Das sanitäre Einbauteil kann somit vollständig aus Kunststoff oder vollständig aus Metall gefertigt sein, oder es kann eine Fertigung einzelner Teile aus Kunststoff und der übrigen Teile aus Metall oder einem sonstigen Werkstoff, beispielsweise Holz oder anderen nachwachsenden Rohstoffen, realisiert sein.

Zur Lösung der eingangs genannten Aufgabe wird auch eine Innschlauchanordnung gemäß Anspruch 15 vorgeschlagen. Die erfindungsgemäße Innenschlauchanordnung weist ein erfindungsgemäßes sanitäres Einbauteil wie zuvor beschrieben, auf. Von Vorteil ist dabei, dass die Innenschlauchanordnung unter den vergleichsweise beengten Verhältnissen einer Sanitärarmatur leicht montierbar ist, da der flexible Verbindungsschlauch während der Montage nach Bedarf biegbar ist. Von Vorteil ist weiter, dass der flexible Verbindungsschlauch in gewissem Umfang eine Schwenkbewegung eines ein Auslauf-Mundstück tragenden Schwenkarms gestattet. Bevorzugt ist der Verbindungsschlauch an dem Schlauchanschluss des erfindungsgemäßen sanitären Einbauteils angeschlossen. Besonders günstig ist es hierbei, wenn der Verbindungsschlauch lösbar angeschlossen ist, um ein Auswechseln zu ermöglichen.

Bei der oben beschriebenen Innenschlauchanordnung ist nun erfindungsgemäß vorgesehen, dass an einem vom Schlauchanschluss abgewandten Ende des Verbindungsschlauchs ein Auslauf-Mundstück angeschlossen ist. Von Vorteil ist dabei, dass eine fertig einbaubare Innenschlauchanordnung bereitgestellt ist. Besonders günstig ist es hierbei, wenn das Auslauf-Mundstück lösbar angeschlossen ist.

Hierbei kann vorgesehen sein, dass eine maximale Außenabmessung des Auslauf-Mundstücks auf eine maximale Außenabmessung des Anschlussstücks abgestimmt ist. Von Vorteil ist dabei, dass das Anschlussstück durch eine Öffnung, in welche das Auslauf-Mundstück passt, hindurchführbar ist. Dies erleichtert die Montage der vormontierten Innenschlauchanordnung bei einer Sanitärarmatur, wobei das Auslauf-Mundstück in eine Auslauföffnung eingesetzt wird, durch welche zuvor das Anschlussstück geführt wurde.

Bei einer Ausgestaltung der Erfindung kann vorgesehen sein, dass der Verbindungsschlauch wenigstens einen längenveränderbaren und/oder knickbaren Axialabschnitt aufweist. Von Vorteil ist dabei, dass die Lage und/oder Länge des Verbindungsschlauchs nach der Montage an der vormontierten Innenschlauchanordnung einfach an die Verhältnisse der Sanitärarmatur anpassbar ist/sind. Beispielsweise kann vorgesehen sein, dass der Axialabschnitt faltenbalgartig gefaltet ist.

Zur Lösung der Aufgabe wird auch eine Sanitärarmatur nach Anspruch 18 vorgeschlagen. Diese ermöglicht eine Schwenkbewegung des Auslauf-Mundstücks in Bezug auf die Einhebel-Mischkartusche, beispielsweise durch Schwenken eines Schwenkarms der Sanitärarmatur. Erfindungsgemäß ist das Auslauf-Mundstück an einem Schwenkarm angeordnet. Somit sind die Vorzüge einer flexiblen Innenschlauchanordnung und einer schwenkbaren Befestigung eines Verbindungsschlauchs an einem sanitären Einbauteil zur Ermöglichung der Schwenkbewegung nutzbar.

Besonders günstig ist es, wenn der Verbindungsschlauch als Bestandteil einer erfindungsgemäßen Innenschlauchanordnung, insbesondere wie zuvor beschrieben, ausgebildet ist. Somit lassen sich die beschriebenen Vorteile miteinander kombinieren.

Der Verbindungsschlauch kann beispielsweise aus PEX (vernetztem Polyäthylen) oder Polyamid oder einem anderen Kunststoff gefertigt sein.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt
- Fig. 1: eine erfindungsgemäße Sanitärarmatur mit montiertem erfindungsgemäßen sanitären Einbauteil,
- Fig. 2: eine weitere erfindungsgemäße Sanitärarmatur mit Schwenkarm und montiertem erfindungsgemäßen sanitären Einbauteil,
- Fig. 3: eine Einzelheit der Sanitärarmatur gemäß Fig.2,
- Fig. 4: ein erfindungsgemäßes sanitäres Einbauteil in Explosionsdarstellung,
- Fig. 5: das erfindungsgemäße sanitäre Einbauteil gemäß Fig.4 mit in einer Richtung ausgerichtetem Anschlussstück,
- Fig. 6: das sanitäre Einbauteil gemäß Fig.5 mit in eine andere Richtung geschwenktem Anschlussstück,
- Fig. 7: die Ausbildung von Verbindungsgängen zweiter Art bei dem Adapterstück des sanitären Einbauteils gemäß Fig. 4 bis 6,
- Fig. 8: das Adapterstück gemäß Fig.7 in einer Schnittdarstellung,
- Fig. 9: das Adapterstück gemäß Fig.7 mit eingezeichnetem Verbindungsgang erster Art,
- Fig. 10: Eine Schnittdarstellung des Adapterstücks gemäß Fig.9,
- Fig. 11 bis Fig. 16: Montageschritte bei einer erfindungsgemäßen Montage einer erfindungsgemäßen Innenschlauchanordnung,
- Fig. 17: eine weitere erfindungsgemäße Innenschlauchanordnung in Exklusionsdarstellung,
- Fig. 18: die Innenschlauchanordnung gemäß Fig.17 in vormontiertem Zustand und
- Fig. 19 bis Fig. 23: Montageschritte bei einer Montage der Innenschlauchanordnung gemäß Fig.18.

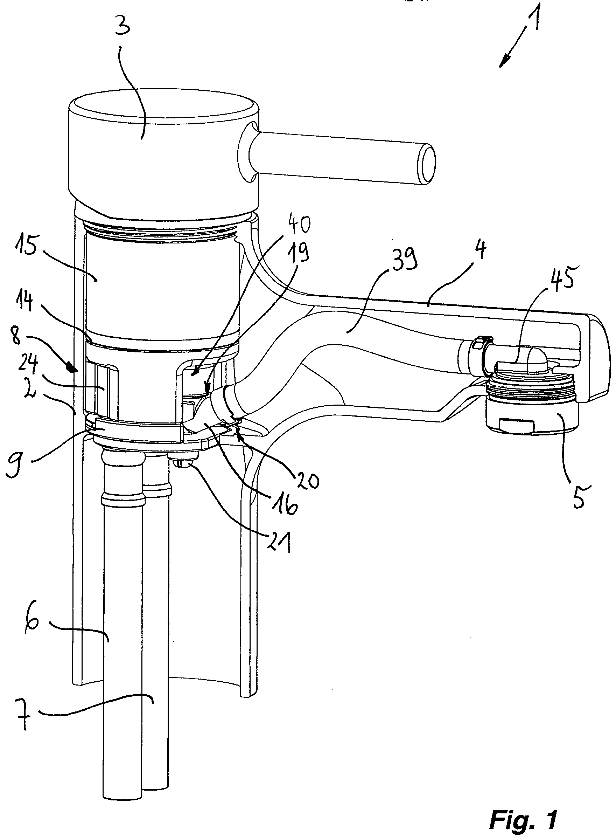

Fig. 1 zeigt eine im Ganzen mit 1 bezeichnete Sanitärarmatur.

Die Sanitärarmatur 1 hat einen Armaturenkörper 2 und einen Handhebel 3.

In einem festen Arm 4 ist ein Auslauf-Mundstück 5 angeordnet.

Von unten sind in dem Armaturenkörper 2 ein Kaltwasserschlauch 6 und ein Warmwasserschlauch 7 eingeführt.

Mit dem Handhebel 3 sind die Menge und das Mischungsverhältnis von Warmwasser zu Kaltwasser an dem Auslauf-Mundstück 5 einstellbar.

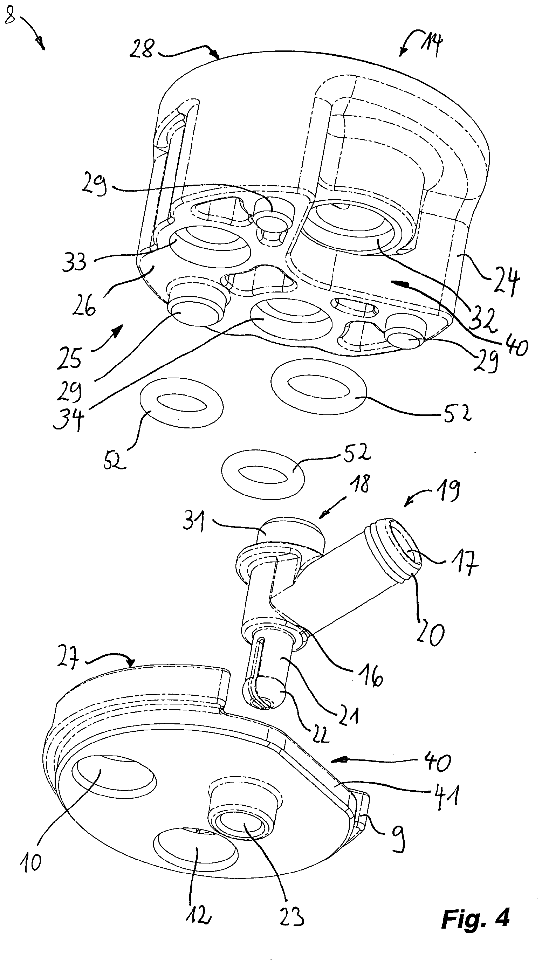

Hierzu ist in dem Armaturenkörper 2 der sanitären Armatur 1 ein erfindungsgemäßes sanitäres Einbauteil 8 eingesetzt, welches in den Figuren 4 bis 8 näher gezeigt und erläutert ist.

Das sanitäre Einbauteil 8 hat eine Grundplatte 9, in welcher eine erste Aufnahme 10 (vgl. Fig. 4) für ein Kaltwasserschlauchendstück 11 ausgebildet ist.

In die erste Aufnahme 10 ist somit der Kaltwasserschlauch 6 einführbar.

Die Grundplatte 9 weist eine zweite Aufnahme 12 auf, in welche ein Warmwasserschlauchendstück 13 des Warmwasserschlauchs 7 einführbar ist.

Die Aufnahmen 10, 12 sind als Bohrungen oder sonstige zylindrische Öffnungen ausgebildet.

An dem sanitären Einbauteil 8 ist in Gebrauchsposition an der oberen Seite ein Verbindungsmittel 14 in Form einer planen Anschlussfläche ausgebildet.

Das Verbindungsmittel 14 ist so eingerichtet und ausgebildet, dass eine Einhebel-Mischkartusche 15 dicht aufsetzbar ist.

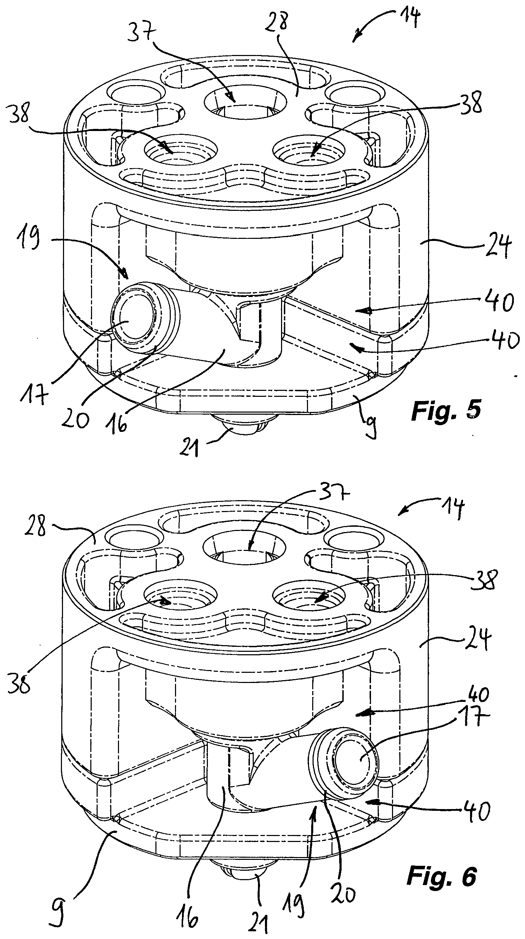

An der Grundplatte 9 ist ein Anschlussstück 16 schwenkbar angeordnet. Das Anschlussstück 16 weist einen durchgehenden Innenkanal 17 (s. Fig. 5 und 6) auf, welcher an einem ersten Ende 18 des Anschlussstücks 16 in noch näher zu beschreibender Weise an dem Verbindungsmittel 14 mündet.

Der Innenkanal 17 mündet an einem zweiten Ende 19 in einen Schlauchanschluss 20.

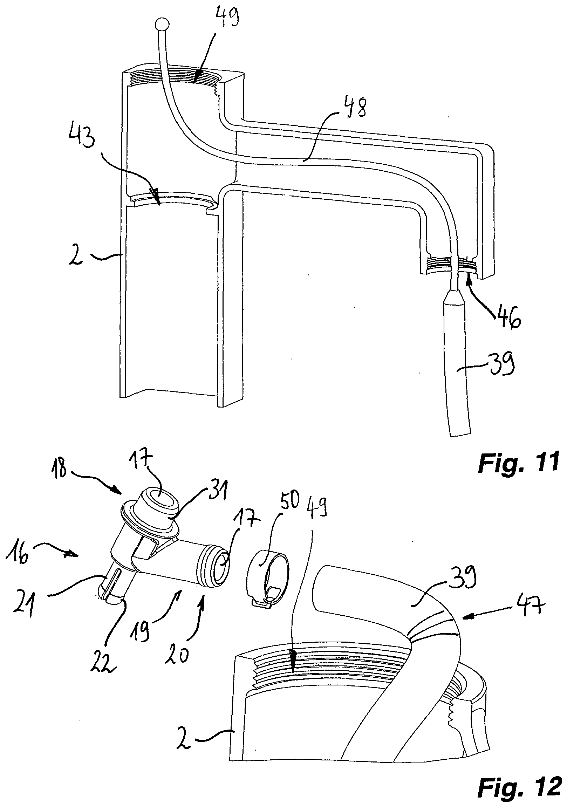

Fig. 12 zeigt das Anschlussstück 16 separat von den übrigen Bauteilen.

Es ist ersichtlich, dass der Innenkanal 17 zwischen dem ersten Ende 18 und dem zweiten Ende 19 in einem spitzen Winkel geführt ist.

An dem Anschlussstück 16 ist in einer Verlängerung des ersten Endes 18 ein Zapfen 21 ausgebildet. Der Zapfen 21 ist geschlitzt ausgeführt und weist eine Rastnase 22 auf. Der Zapfen 21 ist in Gebrauchsstellung in eine Zapfenaufnahme 23 der Grundplatte einsetzbar, wo er mit der Rastnase 22 mit der Grundplatte 9 verrastet.

Die Zapfenaufnahme 23 bildet somit eine Schwenklagerung für das Anschlussstück 16.

Die Schwenkachse diese Schwenklagerung ist parallel zu der Längsachse des sanitären Einbauteils 8 ausgerichtet, welche in Fig. 1 von oben nach unten verläuft.

Dies wird dadurch erreicht, dass die Zapfenaufnahme 23 parallel zu dieser Längsachse ausgerichtet ist.

Zwischen die Grundplatte 9 und die Einhebel-Mischkartusche 15 ist ein Adapterstück 24 eingesetzt.

Dieses Adapterstück 24 weist an einer ersten Seite 25, der Unterseite, eine Grundplattenaufnahme 26 auf.

Die Grundplattenaufnahme 26 ist komplementär zu der Oberseite 27 der Grundplatte 9 ausgebildet, sodass die Form der Grundplattenaufnahme 26 zu der Form der Oberseite 27 passt.

An einer zweiten Seite 28, an der Oberseite des Adapterstücks 24, ist das bereits erwähnte Verbindungsmittel 14 ausgebildet.

Auf die zweite Seite 28 ist somit die Einhebel-Mischbatterie 15 dicht aufsetzbar.

An der ersten Seite 25 sind Vorsprünge 29 ausgebildet, die in entsprechende Ausnehmungen 30 an der Oberseite 27 der Grundplatte 9 eingreifen, um ein Verdrehen des Adapterstücks 24 relativ zu der Grundplatte 9 zu verhindern.

Das Anschlussstück 16 ist in einem das erste Ende 18 des Innenkanals 17 enthaltenden Anschlussbereich 31 mit einer Anschlussstückaufnahme 32 des Adapterstücks 24 steckverbunden.

Anschlussbereich 31 und Anschlussstückaufnahme 32 bilden eine Schwenklagerung.

Der Zapfen 21 und der Anschlussbereich 31 sind koaxial zueinander ausgerichtet, sodass der Zapfen 21 mit der Zapfenaufnahme 23 und der Anschlussbereich 31 mit der Anschlussstückaufnahme 32 das Schwenklager des Anschlussstücks 16 definieren.

In der Fig. 4 ist ersichtlich, dass in dem Adapterstück eine Schlauchaufnahme 33 für das Kaltwasserschlauchendstück 11 und eine Schlauchaufnahme 34 für das Warmwasserschlauchendstück 13 ausgebildet sind.

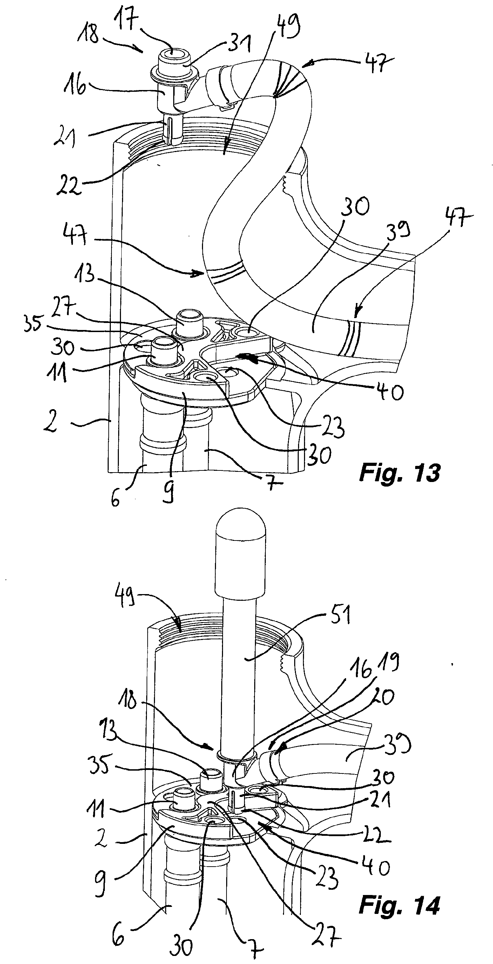

In Fig. 13 ist noch ersichtlich, dass das Kaltwasserschlauchendstück 11 und das Warmwasserschlauchendstück 13 durch Ihre jeweiligen Aufnahmen 10, 12 in der Grundplatte 9 hindurchgesteckt werden.

Anschließend wird zur Sicherung gegen ein Herausfallen quer zur Einsteckrichtung der Schlauchendstücke 11, 13 eine Sicherungsplatte 35 in die Grundplatte 9 eingesetzt.

Diese Sicherungsplatte 35 hintergreift ringförmige Vorsprünge 36 an den Schlauchendstücken 11, 13.

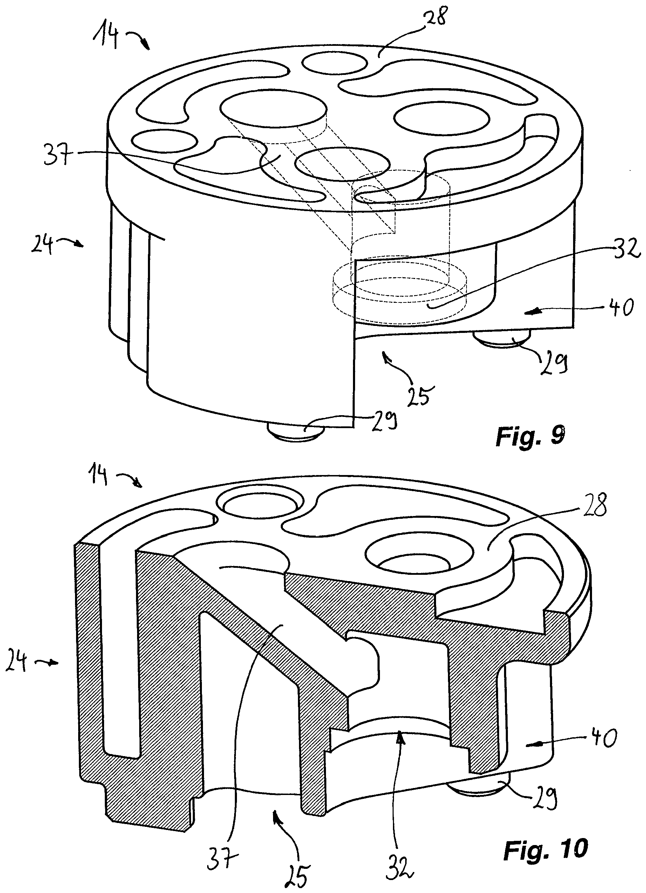

In Fig. 9 und 10 ist erkennbar, dass im Inneren des Adapterstücks 24 ein Verbindungsgang erster Art 37 von der Anschlussstückaufnahme 32 zum Verbindungsmittel 14 geführt ist.

Über diesen Verbindungsgang erster Art 37 ist das Anschlussstück 16 in Gebrauchsstellung an die Einhebel-Mischkartusche 15 angeschlossen.

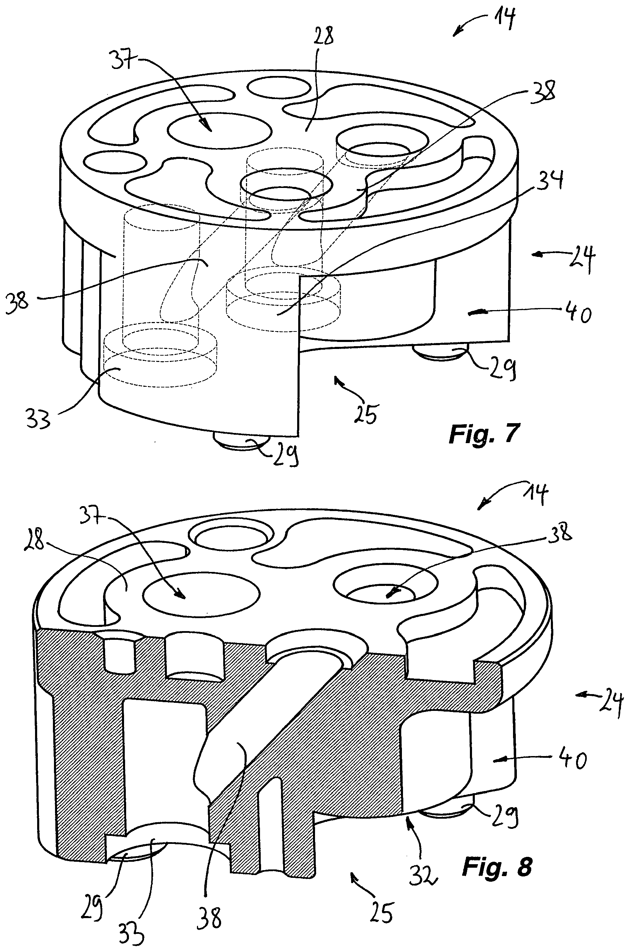

In Fig. 7 und 8 ist erkennbar, dass die Schlauchaufnahmen 33, 34 jeweils über einen Verbindungsgang zweiter Art 38 an das Verbindungsmittel 14 geführt sind.

Die Verbindungsgänge 37, 38 sind jeweils im Inneren des Adapterstücks 16 ausgebildet und verlaufen schräg in Bezug auf die Längsachse des sanitären Einbauteils 8.

Der Verbindungsgang erster Art 37 ist hierbei zwischen den Verbindungsgängen 38 hindurchgeführt und kreuzt diese.

Somit ist der Ausgang der Einhebel-Mischkartusche 15 an den Eingängen der Einhebel-Mischkartusche 15 vorbeigeführt, so dass das Anschlussstück 16 an der dem Auslauf-Mundstück 5 zugewandten Seite des sanitären Einbauteils 8 angeordnet werden kann.

Bei dem beschriebenen Ausführungsbeispiel ist der Schlauchanschluss 20 als Schlauchnippel oder Olive ausgeführt.

Auf den Schlauchanschluss 20 ist ein Verbindungsschlauch 39 aufgesteckt, an dessen freiem Ende das Auslauf-Mundstück 5 befestigt ist.

Bei weiteren Ausführungsbeispielen kann der Schlauchanschluss 20 auch als Ausnehmung ausgebildet sein, in die ein Verbindungsschlauch eingesteckt ist, welcher an seinem anderen Schlauchende an das Auslauf-Mundstück angeschlossen ist.

An der Grundplatte 9 und an dem Adapterstück ist eine keilförmige Aussparung 40 ausgebildet. Die Aussparung 40 begrenzt den verfügbaren Schwenkwinkel für das Anschlussstück 16.

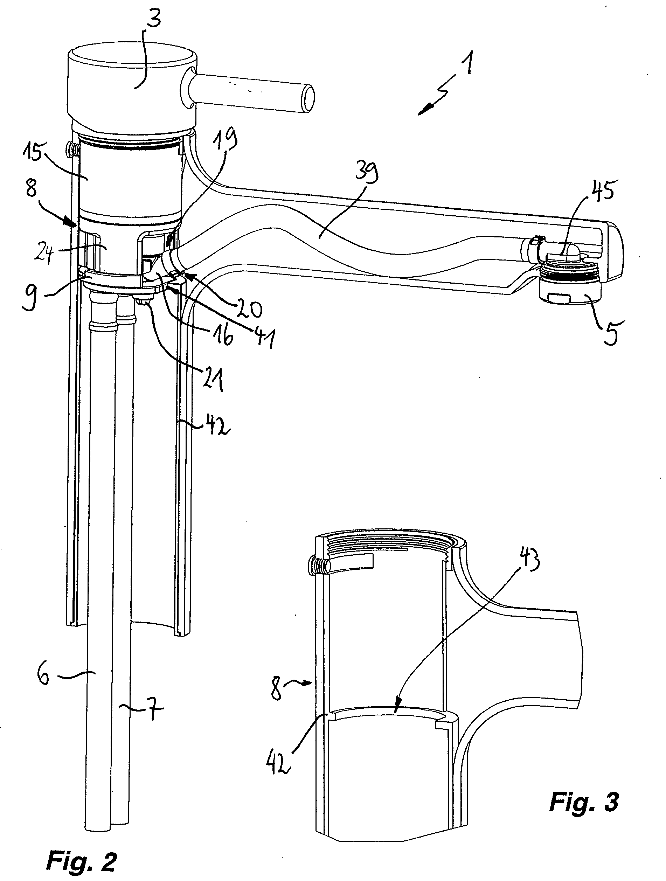

An der Grundplatte 9 ist noch eine unrunde Verdrehsicherung 41 in Form einer Abflachung ausgebildet. Diese wird zu Fig. 2 und 3 näher erläutert.

Fig. 2 und Fig. 3 zeigen ein weiteres Ausführungsbeispiel einer erfindungsgemäßen Sanitärarmatur 1. Konstruktiv und/oder funktionell zu dem vorangegangenen Ausführungsbeispiel gleichartige und/oder ähnliche Bauteile und Funktionseinheiten sind mit denselben Bezugszeichen bezeichnet und nicht noch einmal gesondert beschrieben. Die bisherigen Ausführungen gelten daher entsprechend.

Die Sanitärarmatur 1 gemäß Fig. 2 und Fig. 3 unterscheidet sich von dem zuvor beschrieben Ausführungsbeispiel dadurch, dass der Arm 4 als Schwenkarm ausgebildet ist. Hierzu ist im Inneren der Sanitärarmatur 1 ein feststehendes Rohr 42 angeordnet, um welches der Schwenkarm 4 schwenkbar ist.

Der erreichbare Schwenkbereich ist in an sich bekannter Weise begrenzt.

Die Grundplatte 9 wird in eine Öffnung 43 eingesetzt, die eine unrunde Kontur aufweist. Die Kontur der Grundplatte 9 ist durch die Verdrehsicherung 41 passend auf die Öffnung 43 abgestimmt. Die Verdrehsicherung 41 ist im Ausführungsbeispiel als Abflachung ausgebildet. Bei weiteren Ausführungsbeispielen sind auch Vorsprünge oder Ausnehmungen ausgebildet, um eine unrunde Kontur als Verdrehsicherung 41 bereitzustellen.

Die Grundplatte 9 kann sich somit in der ortsfesten Öffnung 43 nicht drehen. Somit bleibt der gesamte Aufbau auf der Grundplatte 9 ortsfest, wenn der Schwenkarm 4 geschwenkt wird. Lediglich das Anschlussstück 16 folgt der Schwenkbewegung.

Bei den beschriebenen Ausführungsbeispielen sind die Grundplatte 9 und das Adapterstück 16 aus Kunststoff gefertigt, während die Sicherungsplatte 35 aus Metall gefertigt ist.

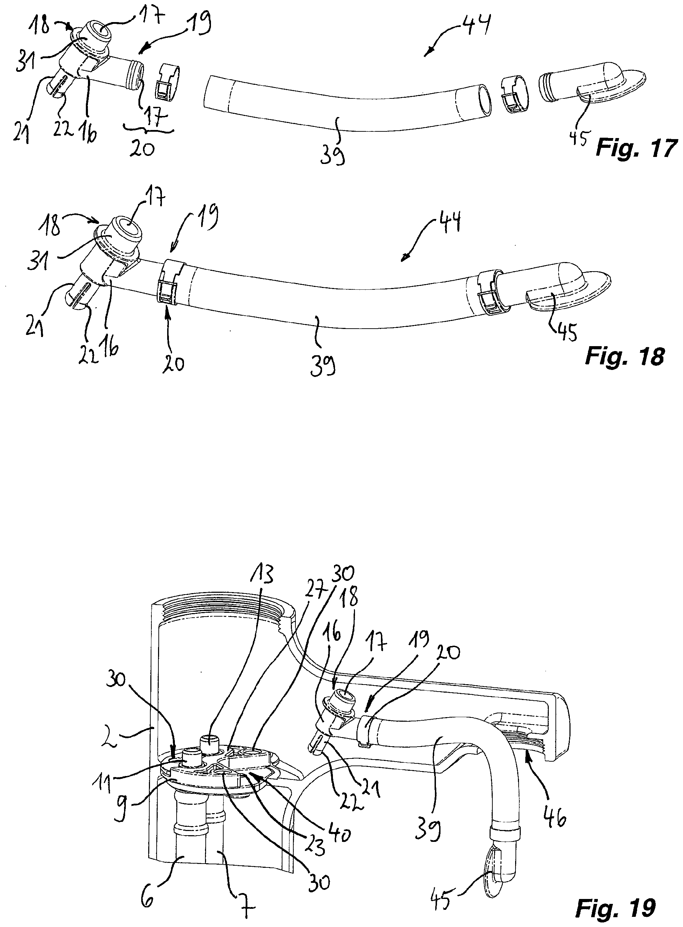

Die Fig. 17 und 18 zeigen eine erfindungsgemäße Innenschlauchanordnung 44 für eine Sanitärarmatur 1, die ein sanitäres Einbauteil 8 und einen flexiblen Verbindungschlauch 39 aufweist.

Der Verbindungsschlauch 39 ist lösbar mit einem Anschlussflansch 45 für das Auslauf-Mundstück 5 und mit dem Anschlussstück 16 verbunden.

Der Anschlussflansch 45 und das Auslauf-Mundstück 5 werden bei der Montage in eine Auslauföffnung 46 des Arms 4 gesetzt.

Die maximale Außenabmessung des Auslauf-Mundstücks 5 und somit die lichte Weite der Auslauföffnung 46 sind hierbei so auf die maximale Außenabmessung des Anschlussstücks 16 abgestimmt, dass das Anschlussstück 16 durch die Auslauföffnung 46 einsetzbar ist.

Um genügend Bewegungsfreiheit zur Verfügung zu haben, weist der Verbindungsschlauch 39 mehrere faltenbalgartig gefaltete Axialabschnitte 47 auf. Durch diese Axialabschnitte 47 ist der Verbindungsschlauch nach Bedarf reversibel längenveränderbar und knickbar.

Den beschriebenen Ausführungsbeispielen ist gemeinsam, dass die Sanitärarmatur 1 eine Einhebel-Mischkartusche 15, eine ersten Aufnahme 10 für ein Kaltwasserschlauchendstück 11 und eine zweiten Aufnahme 12 für ein Warmwasserschlauchendstück 13 sowie ein Auslauf-Mundstück 5 aufweist. Das Auslauf-Mundstück 5 ist hierbei durch einen flexiblen Verbindungsschlauch 39 über ein Anschlussstück 16 mit der Einhebel-Mischkartusche 15 verbunden.

Es sei noch erwähnt, dass in die Schlauchaufnahmen 33, 34 und in die Anschlussstückaufnahme 32 jeweils ein Dichtring 52 eingesetzt wird, vgl. Fig. 4.

Fig. 11 bis 16 zeigen eine erste Montagereihenfolge für eine erfindungsgemäße Innenschlauchanordnung 44, wenn die Auslauföffnung 46 zu eng für das Anschlussstück 16 ist.

Zunächst wird der Verbindungsschlauch 39 mit einer flexiblen Einfädelhilfe 48 durch die Auslauföffnung 46 in den Armaturenkörper 2 hinein und durch die Mischeröffnung 49 aus diesem herausgeführt, Fig. 11.

Anschließend wird das Anschlussstück 16 mit einer Schlauchklemme 50 an dem Verbindungsschlauch 39 befestigt, Fig. 12.

In einem nächsten Schritt wird die Grundplatte 9 in die Öffnung 43 durch die Mischeröffnung 49 eingesetzt. Nun wird das Anschlussstück 16 in die Mischeröffnung 49 eingesetzt. Der Verbindungsschlauch 39 wird hierbei an den vorgesehenen Axialabschnitten 47 reversibel geknickt, Fig. 13.

Der Zapfen 21 wird in die Zapfenaufnahme 23 gesteckt. Hierbei wird ein stabförmiges Werkzeug 51 verwendet, Fig. 14.

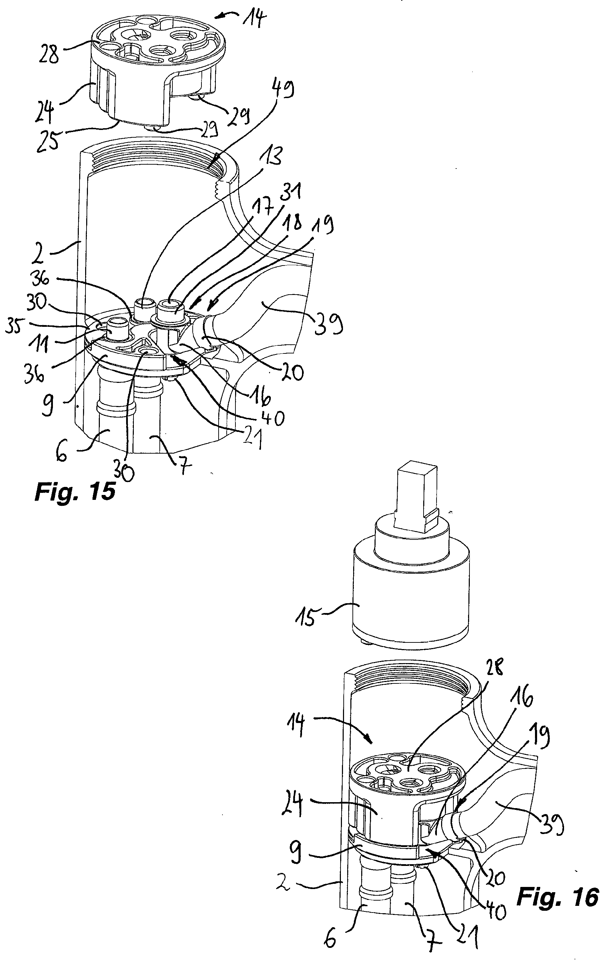

Nun wird das Adapterstück 24 durch die Mischeröffnung 49 auf die Grundplatte 9 aufgesetzt, Fig. 15.

Anschließend wird die Einhebel-Mischkartusche 15 in die Mischeröffnung 49 eingesetzt und befestigt, Fig. 16.

Die überschüssige Länge des Verbindungsschlauchs 39 wird hierbei durch die Axialabschnitte 47 und/oder durch eine gewundene Schlauchführung aufgenommen.

Fig. 19 bis 23 zeigen eine alternative Möglichkeit, eine erfindungsgemäße Innenschlauchanordnung 44 nach Fig. 17 und 18 in eine Sanitärarmatur 1 einzubauen.

Aus Fig. 17 und 18 ist ersichtlich, dass die maximale Außenabmessung des Anschlussstücks 16 kleiner ist als die maximale Außenabmessung des Anschlussflansches 45. Somit passt das Anschlussstück 16 durch jede Öffnung, in die der Anschlussflansch 45 mit dem Auslauf-Mundstück 5 einsetzbar ist.

In einem ersten Schritt wird die Innenschlauchanordnung 44 vormontiert: Das Anschlussstück 16 und der Anschlussflansch 45 werden mit dem Verbindungsschlauch 39 verbunden, Fig. 18.

In einem zweiten Schritt wird die Innenschlauchanordnung 44 durch die Auslauföffnung 46 in den Armaturenkörper 2 eingefädelt. Dabei wird das Anschlussstück 16 zuerst eingeführt, Fig. 29. Die Grundplatte 9 ist hierbei bereits in die Öffnung 43 eingelegt und mit den Schlauchendstücken 11, 13 verbunden.

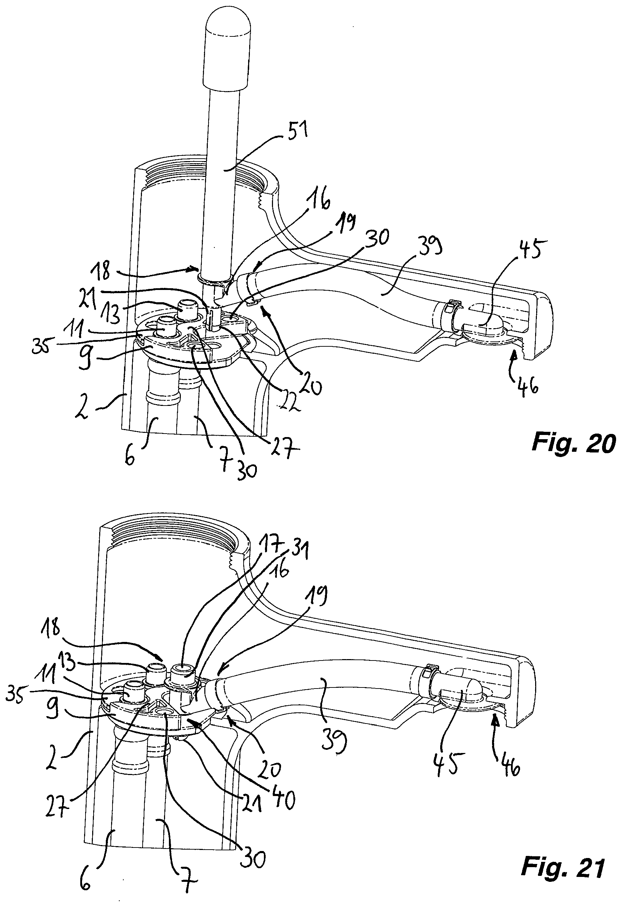

Anschließend wird das Anschlussstück mit dem stabförmigen Werkzeug 51 an dem Anschlussbereich 31 gegriffen, Fig. 20.

Nun wird der Zapfen 21 in die Zapfenaufnahme 23 eingesteckt, Fig. 21.

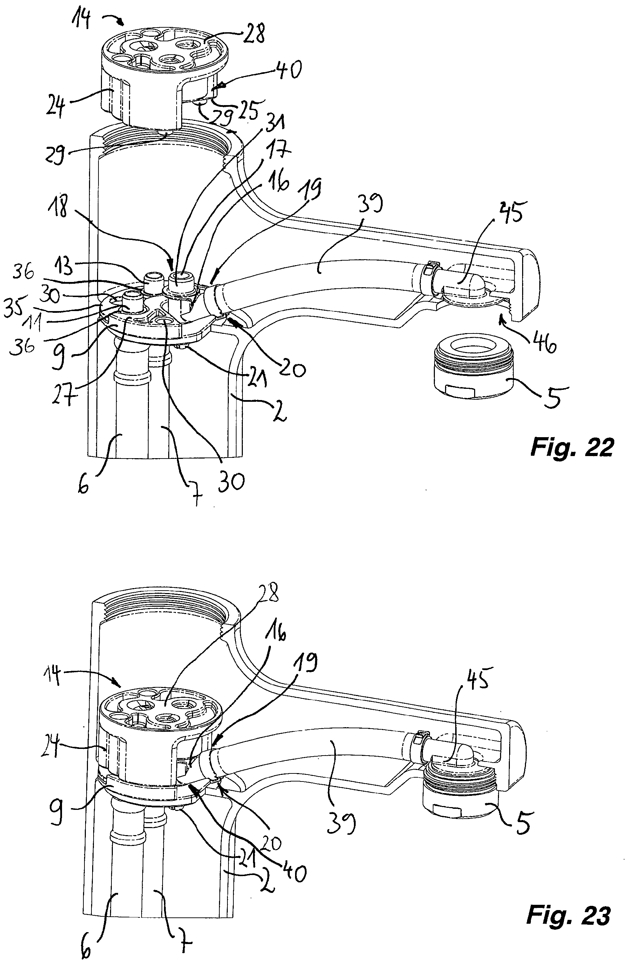

Die Länge des Verbindungsschlauches 39 ist so bemessen, dass der Anschlussflansch 45 in der Auslauföffnung 46 anliegt, wenn der Zapfen 21 in die Zapfenaufnahme 23 gesteckt ist, Fig. 22.

Schließlich wird das Auslauf-Mundstück 5 eingeschraubt, Fig. 23, und die Einhebel-Mischkartusche 15 in die Mischeröffnung 49 eingesetzt (vgl. Fig. 16).

Bei einem sanitären Einbauteil 8 mit einem Verbindungsmittel 14 zur Verbindung mit einer Einhebel-Mischkartusche 15 wird vorgeschlagen, ein Anschlussstück 16 mit einem Schlauchanschluss 20 an einer Grundplatte 9 schwenkbar anzuordnen, wobei die Grundplatte 9 Aufnahmen 10, 12 für einen Kaltwasserschlauchendstück 11 und ein Warmwasserendstück 13 aufweist.

### Bezugszeichenliste

- 1: Sanitärarmatur
- 2: Armaturenkörper
- 3: Handhebel
- 4: Arm
- 5: Auslauf-Mundstück
- 6: Kaltwasserschlauch
- 7: Warmwasserschlauch
- 8: sanitäres Einbauteil
- 9: Grundplatte
- 10: erste Aufnahme
- 11: Kaltwasserschlauchendstück
- 12: zweite Aufnahme
- 13: Warmwasserschlauchendstück
- 14: Verbindungsmittel
- 15: Einhebel-Mischkartusche
- 16: Anschlussstück
- 17: Innenkanal
- 18: erstes Ende
- 19: zweites Ende
- 20: Schlauchanschluss
- 21: Zapfen
- 22: Rastnase
- 23: Zapfenaufnahme
- 24: Adapterstück
- 25: erste Seite
- 26: Grundplattenaufnahme
- 27: Oberseite
- 28: zweite Seite
- 29: Vorsprung
- 30: Ausnehmung
- 31: Anschlussbereich
- 32: Anschlussstückaufnahme
- 33, 34: Schlauchaufnahme
- 35: Sicherungsplatte
- 36: Vorsprung
- 37: Verbindungsgang erster Art
- 38: Verbindungsgang zweiter Art
- 39: Verbindungsschlauch
- 40: Aussparung
- 41: Verdrehsicherung
- 42: Rohr
- 43: Öffnung
- 44: Innenschlauchanordnung
- 45: Anschlussflansch
- 46: Auslauföffnung
- 47: Axialabschnitt
- 48: Einfädelhilfe
- 49: Mischeröffnung
- 50: Schlauchklemme
- 51: Werkzeug
- 52: Dichtring

## Patentansprüche

1. Sanitäres Einbauteil (8) mit einer Grundplatte (9), die eine erste Aufnahme (10) für ein Kaltwasserschlauchendstück (11) und eine zweite Aufnahme (12) für ein Warmwasserschlauchendstück (13) aufweist, und mit einem Adapterstück (24), das an einer ersten Seite (25) eine Grundplattenaufnahme (26) für die Grundplatte (9) und an einer zweiten Seite (27) ein Verbindungsmittel (14) zum Anschluss einer Einhebel-Mischkartusche (15) aufweist, welches Adapterstück auf die Grundplatte (9) aufgesetzt ist, und wobei an der Grundplatte (9) ein Anschlussstück (16) schwenkbar befestigt ist, welches einen Innenkanal (17) aufweist, der an einem ersten Ende (18) an dem Adapterstück (24) und an einem zweiten Ende (19) an einem Schlauchanschluss (20) mündet, **dadurch gekennzeichnet, dass** an dem Anschlussstück (16) ein Zapfen (21) ausgebildet ist, welcher mit einer passenden Zapfenaufnahme (23) der Grundplatte (9) eine Schwenklagerung bildet, dass die Zapfenaufnahme (23) parallel zu einer Längsachse des sanitären Einbauteils (8) ausgerichtet ist, dass eine Aussparung (40) ausgebildet ist, welche einen verfügbaren Schwenkwinkel für das Anschlussstück (16) begrenzt, und dass die Aussparung an der Grundplatte (9) oder dem Adapterstück (24) ausgebildet ist.

2. Sanitäres Einbauteil (8) nach Anspruch 1, **dadurch gekennzeichnet, dass** der Innenkanal (17) zwischen dem ersten Ende (18) und dem zweiten Ende (19) in einem Winkel geführt ist.

3. Sanitäres Einbauteil (8) nach Anspruch 1 oder 2, **dadurch gekennzeichnet, dass** der Zapfen (21) geschlitzt ausgebildet und/oder mit einer Rastnase (22) versehen ist.

4. Sanitäres Einbauteil (8) nach einem der Ansprüche 1 bis 3, **dadurch gekennzeichnet, dass** das Anschlussstück (16) in einem das erste Ende (18) des Verbindungskanals (17) enthaltenden Anschlussbereich (31) mit einer Anschlussstückaufnahme (32) des Adapterstücks (24) steckverbunden ist.

5. Sanitäres Einbauteil (8) nach Anspruch 4, **dadurch gekennzeichnet, dass** die Anschlussstückaufnahme (32) als Schwenklager für das Anschlussstück (16) ausgebildet ist und/oder dass der Zapfen (21) und der Anschlussbereich (31) des Anschlussstücks (16) zueinander koaxial ausgerichtet sind.

6. Sanitäres Einbauteil (8) nach einem der Ansprüche 1 bis 5, **dadurch gekennzeichnet, dass** in dem Adapterstück (24) je eine Schlauchaufnahme (33, 34) zum Anschluss des Kaltwasserschlauchendstücks (11) und des Warmwasserschlauchendstücks (13) ausgebildet ist und/oder dass an der Grundplatte (9) vorzugsweise ein quer zu einer Einsteckrichtung des Kaltwasserschlauchendstücks (11) und des Warmwasserschlauchendstücks (13) einsetzbare Sicherungsplatte (35) angeordnet ist.

7. Sanitäres Einbauteil (8) nach einem der Ansprüche 1 bis 6, **dadurch gekennzeichnet, dass** in dem Adapterstück (24) wenigstens ein bezüglich einer Längsachse schräg verlaufender Verbindungsgang (37, 38), der das Verbindungsmittel (14) mit der Grundplattenaufnahme (26) verbindet, ausgebildet ist.

8. Sanitäres Einbauteil (8) nach Anspruch 6 abhängig von Anspruch 4 oder 5, **dadurch gekennzeichnet, dass** der Anschlussstückaufnahme (32) ein zum Verbindungsmittel (14) mündender Verbindungsgang erster Art (37) zugeordnet ist.

9. Sanitäres Einbauteil (8) nach Anspruch 8, **dadurch gekennzeichnet, dass** den Schlauchaufnahmen (33, 34) jeweils ein zum Verbindungsmittel (14) mündender Verbindungsgang zweiter Art (38) zugeordnet ist.

10. Sanitäres Einbauteil (8) nach Anspruch 9, **dadurch gekennzeichnet, dass** der Verbindungsgang erster Art (37) in dem Adapterstück (24) kreuzend zu den Verbindungsgängen zweiter Art (38) verläuft.

11. Sanitäres Einbauteil (8) nach einem der Ansprüche 1 bis 10, **dadurch gekennzeichnet, dass** der Schlauchanschluss (20) als Schlauchnippel oder Olive ausgebildet ist.

12. Sanitäres Einbauteil nach einem der Ansprüche 6 bis 10, jeweils abhängig von Anspruch 4, **dadurch gekennzeichnet, dass** die Schlauchaufnahmen (33, 34) und/oder die Anschlussstückaufnahme (32) jeweils einen Dichtring (52) aufweist/aufweisen.

13. Sanitäres Einbauteil (8) nach einem der Ansprüche 1 bis 12, **dadurch gekennzeichnet, dass** an der Grundplatte (9) eine vorzugsweise unrunde Verdrehsicherung (41) ausgebildet ist.

14. Sanitäres Einbauteil (8) nach einem der Ansprüche 1 bis 13, **dadurch gekennzeichnet, dass** die Grundplatte (9) und/oder das Adapterstück (24) aus Kunststoff gefertigt ist/sind und/oder dass die Sicherungsplatte (35) aus Metall gefertigt ist.

15. Innenschlauchanordnung (44) für eine Sanitärarmatur (1), mit einem sanitären Einbauteil (8) nach einem der vorhergehenden Ansprüche 1 bis 14, **dadurch gekennzeichnet, dass** die Innenschlauchanordnung zusätzlich einen flexiblen Verbindungsschlauch (39)aufweist, der an das sanitäre Einbauteil angeschlossen oder anschließbar ist, und dass an einem vom Schlauchanschluss (33, 34) abgewandten Ende des Verbindungsschlauchs (39) ein Auslauf-Mundstück (5) angeschlossen ist.

16. Innenschlauchanordnung (44) nach Anspruch 15, **dadurch gekennzeichnet, dass** der Verbindungsschlauch (39) an den Schlauchanschluss (20)lösbar angeschlossen oder anschließbar ist und/oder dass eine maximale Außenabmessung des Auslauf-Mundstücks (5) auf eine maximale Außenabmessung des Anschlussstücks (16) abgestimmt ist.

17. Innenschlauchanordnung (44) nach einem der Ansprüche 15 oder 16, **dadurch gekennzeichnet, dass** der Verbindungsschlauch (39) wenigstens einen längenveränderbaren und/oder knickbaren, insbesondere faltenbalgartig gefalteten, Axialabschnitt (47) aufweist.

18. Sanitärarmatur (1) mit einem sanitären Einbauteil nach einem der Ansprüche 1- 14 und mit einem Auslauf-Mundstück (5), **dadurch gekennzeichnet, dass** das Auslauf-Mundstück (5) durch einen flexiblen Verbindungsschlauch (39) mit der Einhebel-Mischkartusche (15) verbunden ist, und dass das Auslauf-Mundstück (5) an einem Schwenkarm (4) angeordnet ist.

19. Sanitärarmatur (1) nach Anspruch 18, **dadurch gekennzeichnet, dass** der Verbindungsschlauch (39) als Bestandteil einer Innenschlauchanordnung (44) nach einem der Ansprüche 15 bis 18 ausgebildet.

## Claims

1. Sanitary fixture (8) having a base plate (9) which has a first receptacle (10) for a cold-water hose end piece (11) and a second receptacle (12) for a warm-water hose end piece (13), and having an adapter piece (24) that has on a first side (25), a base-plate receptacle (26) for the base plate (9) and, on a second side (27), a connection means (14) for connecting a single-lever mixing cartridge (15), which adapter piece is placed on the base plate (9), and wherein a connector piece (16), which has an inner duct (17) which, at a first end (18), opens out to the adapter piece (24) and, at a second end (19), opens out to a hose connector (20), is pivotably fastened on the base plate (9), **characterized in that** a plug (21) which, together with a matching plug receptacle (23) of the base plate (9), forms a pivot bearing is configured on the connector piece (16), **in that** the plug receptacle (23) is aligned parallel to a longitudinal axis of the sanitary fixture (8), a clearance which delimits an available pivot angle for the connector piece is configured, and **in that** the clearance is configured on the base plate (9) or the adapter piece (24).

2. Sanitary fixture (8) according to Claim 1, **characterized in that** the inner duct (17) is routed at an angle between the first end (18) and the second end (19).

3. Sanitary fixture (8) according to Claim 1 or 2, **characterized in that** the plug (21) is of slotted configuration and/or is provided with a latching cam (22).

4. Sanitary fixture (8) according to one of Claims 1 to 3, **characterized in that** the connector piece (16), in a connector region (31) containing the first end (18) of the connection duct (17), is connected by way of a plug-in connection to a connector-piece receptacle (32) of the adapter piece (24).

5. Sanitary fixture (8) according to Claim 4, **characterized in that** the connector-piece receptacle (32) is configured as a pivot bearing for the connector piece (16) and/or **in that** the plug (21) and the connector region (31) of the connector piece (16) are aligned coaxially in relation to one another.

6. Sanitary fixture (8) according to one of Claims 1 to 5, **characterized in that** in each case one hose receptacle (33, 34) for connecting the cold-water hose end piece (11) and the warm-water hose end piece (13) is configured in the adapter piece (24) and/or **in that** a securing plate (35) which is insertable in a transverse manner to an insertion direction of the cold-water hose end piece (11) and of the warm-water hose end piece (13) is preferably arranged on the base plate (9).

7. Sanitary fixture (8) according to one of Claims 1 to 6, **characterized in that** at least one connection duct (37, 38) which runs obliquely in relation to a longitudinal axis and which connects the connection means (14) to the base-plate receptacle (26) is configured in the adapter piece (24) .

8. Sanitary fixture (8) according to Claim 6 dependent on Claim 4 or 5, **characterized in that** the connector-piece receptacle (32) is assigned a connection duct of the first type (37) which opens out to the connection means (14).

9. Sanitary fixture (8) according to Claim 8, **characterized in that** the hose receptacles (33, 34) are in each case assigned a connection duct of the second type (38) which opens out to the connection means (14).

10. Sanitary fixture (8) according to Claim 9, **characterized in that** the connection duct of the first type (37) runs inside the adapter piece (24) in an intersecting manner to the connection ducts of the second type (38).

11. Sanitary fixture (8) according to one of Claims 1 to 10, **characterized in that** the hose connector (20) is configured as a hose nipple or an olive.

12. Sanitary fixture according to one of Claims 6 to 10, in each case dependent on Claim 4, **characterized in that** the hose receptacles (33, 34) and/or the connector-piece receptacle (32) have/has in each case one seal ring (52).

13. Sanitary fixture (8) according to one of Claims 1 to 12 **characterized in that** a preferably non-circular anti-rotation device (41) is configured on the base plate (9).

14. Sanitary fixture (8) according to one of Claims 1 to 13, **characterized in that** the base plate (9) and/or the adapter piece (24) are/is made of plastic and/or **in that** the securing plate (35) is made of metal.

15. Inner-hose arrangement (44) for a sanitary fitting (1), having a sanitary fixture (8) according to one of the preceding Claims 1 to 14, **characterized in that** the inner-hose arrangement additionally has a flexible connection hose (39) which is connected or connectable to the sanitary fixture, and **in that** an outlet mouthpiece (5) is preferably releasably connected to an end of the connection hose (39) that faces away from the hose connector (33, 34).

16. Inner-hose arrangement (44) according to Claim 15, **characterized in that** the connection hose (39) is releasably connected or connectable to the hose connector (20) and/or **in that** a maximum outer dimension of the outlet mouthpiece (5) is adapted to a maximum outer dimension of the connector piece (16).

17. Inner-hose arrangement (44) according to either of Claims 15 or 16, **characterized in that** the connection hose (39) has at least one axial portion (47) which can be varied in length and/or can be kinked, in particular is folded in a bellows-like manner.

18. Sanitary fitting (1) having a sanitary fixture according to one of claims 1-14 and having an outlet mouthpiece (5), **characterized in that** the outlet mouthpiece (5) is connected to the single-lever mixing cartridge (15) by a flexible connection hose (39), and **in that** the outlet mouthpiece (5) is arranged on a pivot arm (4).

19. Sanitary fitting (1) according to Claim 18, **characterized in that** the connection hose (39) is configured as a component of an inner-hose arrangement (44) according to one of Claims 15 to 18.

## Revendications

1. Pièce d'insertion sanitaire (8) avec une plaque de base (9), qui présente un premier logement (10) pour une pièce d'extrémité de tuyau d'eau froide (11) et un second logement (12) pour une pièce d'extrémité de tuyau d'eau chaude (13), et avec une pièce d'adaptateur (24), qui présente sur un premier côté (25) un logement de plaque de base (26) pour la plaque de base (9) et sur un second côté (27) un moyen d'assemblage (14) pour le raccordement d'une cartouche mélangeuse à levier unique (15), ladite pièce d'adaptateur étant posée sur la plaque de base (9), et dans lequel une pièce de raccordement (16) est fixée de façon pivotante sur la plaque de base (9) et présente un canal intérieur (17), qui débouche à une première extrémité (18) à la pièce d'adaptateur (24) et à une seconde extrémité (19) à un raccord de tuyau (20), **caractérisée en ce qu'**un pivot (21) est formé sur la pièce de raccordement (16), lequel forme un support pivotant avec un logement de pivot ajusté (23) de la plaque de base (9), **en ce que** le logement de pivot (23) est orienté parallèlement à un axe longitudinal de la pièce d'insertion sanitaire (8), **en ce qu'**une découpe (40) est formée et limite un angle de pivotement disponible pour la pièce de raccordement (16), et **en ce que** la découpe est formée sur la plaque de base (9) ou sur la pièce d'adaptateur (24).

2. Pièce d'insertion sanitaire (8) selon la revendication 1, **caractérisée en ce que** le canal intérieur (17) est conduit avec un angle entre la première extrémité (18) et la seconde extrémité (19).

3. Pièce d'insertion sanitaire (8) selon la revendication 1 ou 2, **caractérisée en ce que** le pivot (21) est fendu et/ou est doté d'un nez d'encliquetage (22).

4. Pièce d'insertion sanitaire (8) selon l'une quelconque des revendications 1 à 3, **caractérisée en ce que** la pièce de raccordement (16) est assemblée par engagement dans une région de raccordement (31) contenant la première extrémité (18) du canal de raccordement (17) avec un logement de pièce de raccordement (32) de la pièce d'adaptateur (24).

5. Pièce d'insertion sanitaire (8) selon la revendication 4, **caractérisée en ce que** le logement de pièce de raccordement (32) est réalisé sous forme de palier pivotant pour la pièce de raccordement (16) et/ou **en ce que** le pivot (21) et la région de raccordement (31) de la pièce de raccordement (16) sont orientés de façon coaxiale l'un à l'autre.

6. Pièce d'insertion sanitaire (8) selon l'une quelconque des revendications 1 à 5, **caractérisée en ce qu'**un logement de tuyau (33, 34) est formé respectivement dans la pièce d'adaptateur (24) pour le raccordement de la pièce d'extrémité du tuyau d'eau froide (11) et de la pièce d'extrémité du tuyau d'eau chaude (13) et/ou **en ce que** de préférence une plaque de fixation (35) insérable transversalement à une direction d'engagement de la pièce d'extrémité de tuyau d'eau froide (11) et de la pièce d'extrémité de tuyau d'eau chaude (13) est disposée sur la plaque de base (9).

7. Pièce d'insertion sanitaire (8) selon l'une quelconque des revendications 1 à 6, **caractérisée en ce qu'**au moins un passage de raccordement (37, 38) s'étendant en oblique par rapport à un axe longitudinal, qui relie le moyen d'assemblage (14) au logement de plaque de base (26), est formé dans la pièce d'adaptateur (24).

8. Pièce d'insertion sanitaire (8) selon la revendication 6 dépendant de la revendication 4 ou 5, **caractérisée en ce qu'**un passage de raccordement du premier type (37) débouchant vers le moyen d'assemblage (14) est associé au logement de pièce de raccordement (32).

9. Pièce d'insertion sanitaire (8) selon la revendication 8, **caractérisée en ce qu'**un passage de raccordement du deuxième type (38) débouchant vers le moyen d'assemblage (14) est associé respectivement aux logements de tuyau (33, 34).

10. Pièce d'insertion sanitaire (8) selon la revendication 9, **caractérisée en ce que** le passage de raccordement du premier type (37) s'étend dans la pièce d'adaptateur (24) en croisant les passages de raccordement du deuxième type (38).

11. Pièce d'insertion sanitaire (8) selon l'une quelconque des revendications 1 à 10, **caractérisée en ce que** le raccord de tuyau (20) est formé par un mamelon de tuyau ou une olive.

12. Pièce d'insertion sanitaire selon l'une quelconque des revendications 6 à 10, dépendant respectivement de la revendication 4, **caractérisée en ce que** les logements de tuyau (33, 34) et/ou le logement de pièce de raccordement (32) présente(nt) respectivement un joint d'étanchéité (52).

13. Pièce d'insertion sanitaire (8) selon l'une quelconque des revendications 1 à 12, **caractérisée en ce qu'**une protection contre la rotation de préférence non ronde (41) est formée sur la plaque de base (9).

14. Pièce d'insertion sanitaire (8) selon l'une quelconque des revendications 1 à 13, **caractérisée en ce que** la plaque de base (9) et/ou la pièce d'adaptateur (24) est/sont fabriquée(s) en matière plastique et/ou **en ce que** la plaque de fixation (35) est fabriquée en métal.

15. Agencement de tuyauterie intérieure (44) pour une robinetterie sanitaire (1), avec une pièce d'insertion sanitaire (8) selon l'une quelconque des revendications 1 à 14, **caractérisé en ce que** l'agencement de tuyauterie intérieure présente en outre un tuyau de raccordement flexible (39), qui est ou qui peut être raccordé à la pièce d'insertion sanitaire et **en ce qu'**un embout de sortie (5) est raccordé à une extrémité du tuyau de raccordement (39) située à l'opposé du raccord de tuyau (33, 34).

16. Agencement de tuyauterie intérieure (44) selon la revendication 15, **caractérisé en ce que** le tuyau de raccordement (39) est ou peut être raccordé de façon détachable au raccord de tuyau (20) et/ou **en ce qu'**une dimension extérieure maximale de l'embout de sortie (5) est accordée à une dimension extérieure maximale de la pièce de raccordement (16).

17. Agencement de tuyauterie intérieure (44) selon une des revendications 15 ou 16, **caractérisé en ce que** le tuyau de raccordement (39) présente au moins une partie axiale de longueur variable et/ou flexible (47), en particulier plissée à la manière d'un soufflet plissé.

18. Robinetterie sanitaire (1) avec une pièce d'insertion sanitaire selon l'une quelconque des revendications 1 à 14 et avec un embout de sortie (5), **caractérisée en ce que** l'embout de sortie (5) est relié par un tuyau de raccordement flexible (39) à la cartouche mélangeuse à levier unique (15), et **en ce que** l'embout de sortie (5) est disposé sur un bras pivotant (4).

19. Robinetterie sanitaire (1) selon la revendication 18, **caractérisée en ce que** le tuyau de raccordement (39) est réalisé sous la forme d'un composant d'un agencement de tuyauterie intérieure (44) selon l'une quelconque des revendications 15 à 18.
